# EUROPEAN PATENT SPECIFICATION

(11) **EP 3 565 211 B1**
(45) Date of publication and mention of the grant of the patent: **07.04.2021**
(21) Application number: 18170531.0
(22) Date of filing: 03.05.2018
(51) Int. Cl.: H04L 29/06, H04W 12/08, H04W 12/00

(54) **METHOD NETWORK ELEMENT, SYSTEM AND COMPUTER READABLE MEDIUM, FOR ONBOARDING A DEVICE**
VERFAHREN, NETZWERKELEMENT, SYSTEM UND COMPUTERLESBARES MEDIUM ZUR INTEGRATION EINER VORRICHTUNG
PROCÉDÉ, ÉLÉMENT DE RÉSEAU, SYSTÈME ET SUPPORT LISIBLE PAR ORDINATEUR POUR L'EMBARQUEMENT D'UN DISPOSITIF

(43) Date of publication of application: 06.11.2019
(73) Proprietor: Nokia Technologies Oy, 02610 Espoo (FI)
(72) Inventor: VERDOT, Vincent, 91620 Nozay (FR); PELOSO, Pierre, 91620 Nozay (FR)
(74) Representative: Nokia EPO representatives

(56) References cited:
- EP-A1- 3 295 350
- WO-A1-2016/003310
- US-A1- 2018 084 058

## Description

### FIELD OF INVENTION

The present subject matter relates to a method to onboard a device. This method can be for example be realized by a network element. The subject matter is also related to the device; the network element and a system comprising the device and the network element. More specifically the device can be an Internet of Things device and/or the network element can be a gateway or a set-top box owned by an end user.

### BACKGROUND

This invention is related to the Internet of Things' (IoT) ecosystem, and more specifically to how "dumb" low computational power devices can be easily and securely onboarded to existing IoT infrastructures. By IoT ecosystem we mean a network of physical devices, vehicles, home appliances and other items embedded with electronics, software, sensors, actuators, and connectivity which enables these objects to connect and exchange data. Each thing is uniquely identifiable through its embedded computing system but is able to inter-operate within the existing Internet infrastructure. (could you please amend/correct my definition of IoT ecosystem if needed).

By onboarding a device, for example a newly acquired IoT device, to a managed environment via a gateway we mean. administratively allows this device generally constituted of hardware and software to access your resources (network, data, other devices). This a critical but mandatory step when the end user want to use this device. This onboarding will allow the end user to take ownership on the device and to grant it the necessary permissions to operate as expected (Internet access, control on appliances e.g. heating system or screens, etc). This onboarding process is critical because granted access may have dire consequences on the existing assets and moreover, are difficult to revoke (without a centralized ACL). The US patent application reference US2018/084058 describes granting of remote access to a local device via manual pin code check. The PCT patent application reference WO2016/003310 describes a use of a second, pre-authorized device (registered to a 3rd party service for trust management), in order to achieve mutual authentication with the one to be onboarded (aka "bootstrapping" in document) and eventually provide local infrastructure credentials. The EP patent application reference EP3'295'350 describes to identify a specific "machine" and bind it to license/serial number to control the use of software programs.

### SUMMARY

This summary is provided to introduce concepts related to methods to allocate resources to an application.

In one implementation, a method for onboarding a device is described. This method comprises a first step of receiving a connect message this message comprising a unique network identifier address of the device and a second step of receiving the first hash and the serial number of the device , the first hash being the hash of the concatenation of the serial number and the unique network identifier address and a step of determining a second hash of the concatenation of the serial number and the unique network identifier address of the connected device and a step of onboarding the device if the first hash is equal to the second hash.

In another implementation, a network element to onboard a device is described. This network element comprises first means for receiving a connect message this message comprising a unique network identifier address of the device and second means for receiving the first hash and the serial number of the device, the first hash being the hash of the concatenation of the serial number and the unique network identifier address and means for determining a second hash of the concatenation of the serial number and the unique network identifier address of the connected device and means for onboarding the device if the first hash is equal to the second hash.

In another implementation, a system to onboard a device is described. This system comprises a device to be onboarded on the system and a network element as previously described.

In another implementation, a computer-readable medium is described. This computer-readable medium has embodied thereon a computer program configured to realize a method to onboard a device on a gateway. This method comprises a first step of receiving a connect message this message comprising a unique network identifier address of the device and a second step of receiving the first hash and the serial number of the device, the first hash being the hash of the concatenation of the serial number and the unique network identifier address and a step of determining a second hash of the concatenation of the serial number and the unique network identifier address of the connected device and a step of onboarding the device if the first hash is equal to the second hash.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of systems and/or methods in accordance with embodiments of the present subject matter are now described, by way of example only, and with reference to the accompanying figures, in which:
Figure 1 presents embodiment of the method of the present subject matter.
Figure 2 presents an embodiment of the network element of the present subject matter.
Figure 3 presents an embodiment of the system of the present subject matter.
Figure 4 presents another embodiment of the method of the present subject matter.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

In an embodiment, the onboarding method is operated from an administrative interface (Web user interface or dedicated application) by authorized users. For example, this embodiment can be based on manual configuration. In a typical scenario of very basic device, the administrator will add the new appliance by entering corresponding information in the system (through a dedicated management interface): various properties (name, brand, type), but also a unique identifier so the system can associate the provided data with the newly connected entity. For basic devices (with fewer capabilities), the currently only usable identifier is the MAC address (OSI - Level 2). So, this identifier will either be manually entered by the administrator (MAC address being available in the appliance's installation documentation) or selected from the list of MAC addresses of connected devices (detected by the system).

However, using this method, the distance (spatial and temporal) between the new device being connected and the control interface to authorize it raises two key problems: miscorrelation and impersonification.
Miscorrelation occurs when the device onboarded by the gateway is not the one expected by the administrator. The more devices present in range of a gateway, the more likely is this issue to happen. Thus, this risk is typical of IoT ecosystem which consists of numerous devices, often look-alikes (e.g. sensors) and with low computational power (only identifiable by their network address). In such conditions, it may be difficult for the administrator to match given virtual identities with corresponding physical devices.

Impersonification is a malicious strategy that consists for an attacker to replace an existing authorized (or authorizable) device by another one he could control. The objective being to obtain elevated rights to compromise the managed IoT ecosystem (e.g. Trojan horse) or simply disrupt existing services (e.g. Denial of Service).

The embodiments presented in the following part solve this problem and avoid the risk of miscorrelation or impersonification.

In other embodiments, the method can use advanced mechanisms for automatic onboarding based on an active device (via a proprietary protocol). By applicative stack we mean any feature that would require more than a basic network connectivity (above OSI model layer 2), such as high-level signaling messages, HTTP(s) REST, session/state management mechanisms. However, this embodiment would require the devices and/or gateway to support and implement an applicative stack. The further embodiments of this divulgation avoid this disadvantage and don't require the devices and/or gateway to support and implement an applicative stack.

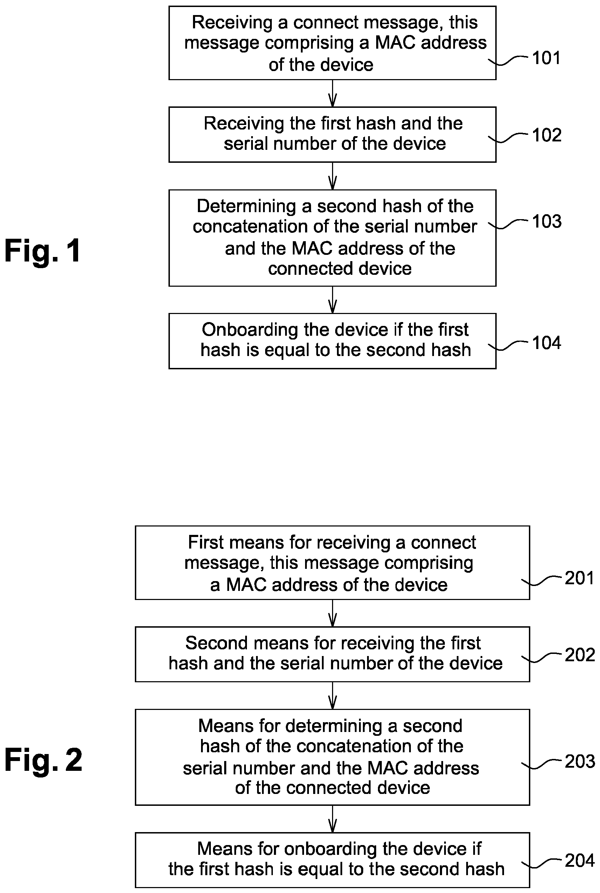

In a further embodiment presented figure 1, a method for onboarding a device is described. This method comprises:
- a first step 101 of receiving a connect message this message comprising a unique network identifier of the device and
- a second step 102 of receiving the first hash and the serial number of the device and
- a step 103 of determining a second hash of the concatenation of the serial number and the unique network identifier of the connected device and
- a step 104 of onboarding the device if the first hash is equal to the second hash.

In an embodiment, the first step 101 of receiving is realized by the network element and the connect message is received from the device.

In an embodiment, the unique network identifier is a media access control address (MAC address).

In an embodiment, the second step 102 of receiving is realized by the network element.

In an embodiment, the first hash and the serial number are created by the manufacturer and written (exposed) for example:
1- on the device,
2- on the device's package (commercial boxing)
3- in the user-manual. (Clear-text, QR-code, NFC, etc).
Once read (via for example a smartphone and/or a dedicated administrative application), this data is sent to the network element.

In an embodiment, the first hash is the hash of the concatenation of the serial number and the unique network identifier.

In an embodiment, the step 103 of determining is realized by the network element.

Once onboarded, the device is trusted to connect and interact with the local network ecosystem. In an embodiment the step 104 is configured to grant access at the device to the network resources (new firewall / routing rules are automatically created) according to the local manager's instructions (access to all devices, access to the Internet, port forwarding,etc).

In an embodiment, the network element is a gateway or a set-top box. In an embodiment, the gateway or IoT gateway is the "physical" component providing network (wireless) connectivity. In another embodiment for example in a SDN-controlled infrastructure, this gateway could be a cloud function managing access points. In an embodiment, this gateway is also in control of the connectivity or remotely manage routers of the local infrastructure.

In an embodiment, the device is an IoT device. In other embodiments, the device is a smartphone, a network equipment, a personal computer or any device requiring connectivity (and untrusted when acquired).

In an embodiment, the first hash and the serial number of the device are comprises within a URI (Uniform Resource Identifier is an agnostic identifier concept, providing some constraints for interoperability sake, in some embodiments the URI is a string of characters used to identify a resource. URI is described in IETF RFC 3986). This URI will allow the network element to quickly and securely onboard the device. In some embodiments, the URI can also comprise extra parameters for additional features such as the URL (Uniform Resource Locator) to manufacturer's service API, hashing algorithm, serial number, etc. This URI can be provided in many ways: for example, "clear-text", Bar/QR (Quick Response) codes, RFID (Radio-Frequency Identification), NFC (Near-Field Communication). Furthermore, this URI can be physically bound to the device (or manual/package).

These different previously described embodiments allow the devices to be simply onboarded with no possible miscorrelation. Moreover, impersonification is much more difficult as 1/ MAC address is no more disclosed, 2/ more specific data can be retrieved from the device's manufacturer service API (cf. details next section). Furthermore, the methods described in these embodiments are very light, stateless and fast; it can, by design, counter DoS (Denial of Service) attacks (typically based on multiple forged onboarding requests) by failing fast.

Figure 2 presents an embodiment of a network element, for example a gateway or a set-top box. This network element is configured to onboard a device and comprises:
- first means 201 for receiving a connect message this message comprising a unique network identifier of the device and
- second means 202 for receiving the first hash and the serial number of the device and
- means 203 for determining a second hash of the concatenation of the serial number and the unique network identifier of the connected device and
- means 204 for onboarding the device if the first hash is equal to the second hash.

In another embodiment, the network element comprises:
- at least one processor; and
- at least one memory including computer program code, the at least one memory and computer program code configured to, with the at least one processor, cause the apparatus:
- receiving a connect message this message comprising a unique network identifier of the device and
- receiving the first hash and the serial number of the device and
- determining a second hash of the concatenation of the serial number and the unique network identifier of the connected device and
- onboarding the device if the first hash is equal to the second hash.

In other embodiments, the network elements can be organized as a specific circuit, or computer or can be a functional circuit, part of a common server or any partition in between.

In an embodiment, the unique network identifier is a media access control address (MAC address).

As used in this application, the term "circuitry" may refer to one or more or all of the following:
- hardware-only circuit implementations (such as implementations in only analog and/or digital circuitry) and
- combinations of hardware circuits and software, such as (as applicable):
- a combination of analog and/or digital hardware circuit(s) with software/firmware and
- any portions of hardware processor(s) with software (including digital signal processor(s)), software, and memory(ies) that work together to cause an apparatus, such as a mobile phone or server, to perform various functions) and
- hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The object of the present subject matter is also a system. This system comprises:
- a device that we want to onboard to the local IoT infrastructure
- a network element this network element being configure to onboard the device, this network element comprising:
   first means 201 for receiving a connect message this message comprising a MAC address of the device and
   second means 202 for receiving the first hash and the serial number of the device and means 203 for determining a second hash of the concatenation of the serial number and the MAC address of the connected device and
   means 204 for onboarding the device if the first hash is equal to the second hash.

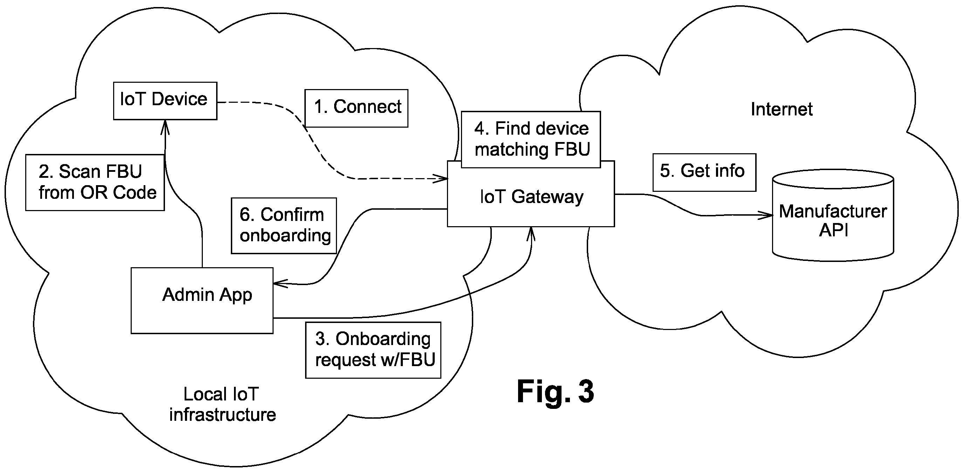

The figure 3 presents another embodiment of this system. Within this embodiment, and in comparison, to the previous embodiment, the system comprises:
- the device we want to onboard to the local IoT infrastructure, as previously described,
- The network element, also called "point of contact to the local IoT infrastructure" and that will allow the local IoT infrastructure's administrator to onboard the device.
- In this embodiment, the system comprises an optional element, that can be configured by the device's manufacturer and which may provide an API to support onboarding.

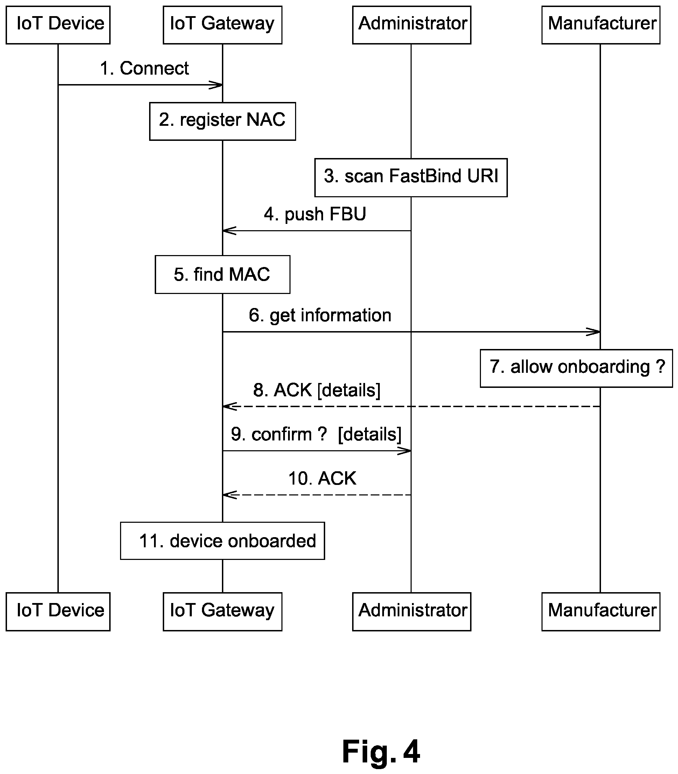

Figure 4 presents in a different way the method of the previously described embodiments. This figure 4 also presents optional elements that were presented previously. More precisely this figure 4 presents the various interactions that take place during a device onboarding process based on the proposed URI mechanisms. The different actors are the one described within the figure 3.
1. Once the newly acquired device (for example IoT device) is unboxed and powered on, it connects to the local IoT infrastructure through the network element (for example IoT Gateway). At this point, connectivity (for example using wireless) is established between the device and the network element but the former is completely blocked (network-wise) as it is not yet onboarded (and so not yet "trusted").
2. MAC address is registered, this is already part of existing network stacks as the network element is acting as an access point for the device. We assume that MAC addresses of connected devices are known and accessible at any time.
3. In the meantime, after powering on the device, the user (who is also administrating the IoT local infrastructure in our case), retrieves the device's URI by scanning it with his smartphone (for example a QR code). This URIcould also be manually entered if no proximity communication mechanism is available.
4. The onboarding request is sent to the network element in charge of onboarding by providing the corresponding device's URI. This is achieved manually through the administration UI (e.g. Web page) or via a dedicated application through a proprietary interface (e.g. REST, RPC, etc).
5. The network element checks that the incoming request corresponds to a connected device. To do so, it runs a simple algorithm such as the one presented below. This lightweight operation (CPU and memory wise) enables filtering flooding attacks by blocking malformed or forged requests, blocking malicious devices and pre-authorizing matching ones. For a fully automatic and basic use case, the whole onboarding mechanism could end up here as steps 6 - 10 are optional. They add valuable onboarding feature for very little cost, though.
6. If the URI carries a manufacturer URL, it means the device's producer exposes an onboarding API which can be used to retrieve additional information about the appliance (name, type, serial number, owner, stats, trust, certificates...), possibilities are endless.
7. One practical use case from the manufacturer's API would be to verify the onboardable status of the product with regards to owner's security preferences. For example, a strict approach would be to accept single-time onboarding so the device couldn't be reassigned to another IoT Gateway without the owner's consent.
8. The manufacturer's server sends back onboarding authorization along with device details.
9. These details provide a more specific view of what device is about to be onboarded, so the administrator can screen the request and validate it through his management UI.
10. If required (and desired), the administrator validates the onboarding.
11. The device is eventually onboarded, i.e. a virtual instance of the physical appliance is created and bound to the connected network entity (identified by MAC address). The administrator can then manage its connectivity to the other elements of the IoT infrastructure and/or external access (typical firewall rules).

In an embodiment, the algorithm of the step 5 of the embodiment described above is the following:

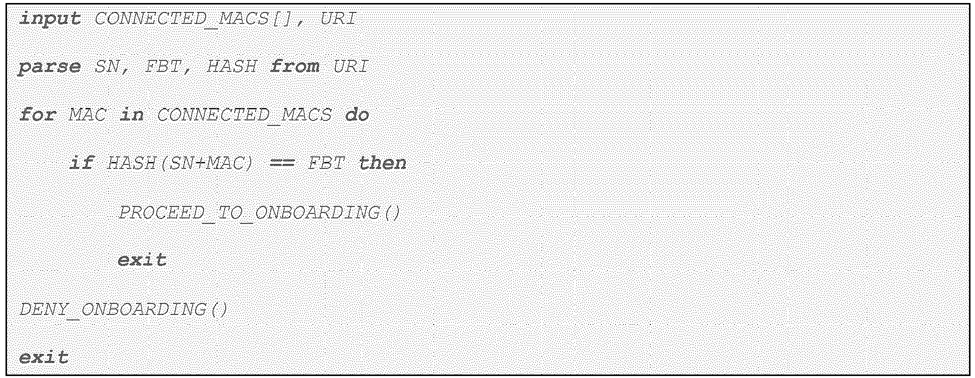

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all the steps of the described method. The program storage devices may be, for example, digital memories, magnetic storage media, such as magnetic disks and magnetic tapes, hard drives, or optically readable digital data storage media.

Another embodiment of the present subject matter is a computer-readable medium having embodied thereon a computer program configured to realize the method, presented figure 1, for onboarding a device. The method comprises:
- a first step 101 of receiving a connect message this message comprising a unique network identifier address of the device and
- a second step 102 of receiving the first hash and the serial number of the device and
- a step 103 of determining a second hash of the concatenation of the serial number and the unique network identifier address of the connected device and
- a step 104 of onboarding the device if the first hash is equal to the second hash.

## Claims

1. Method for onboarding a device comprising:
a first step (101) of receiving, by a network element and from the device, a connect message this message comprising a unique network identifier address of the device,
a second step (102) of receiving a first hash and is a serial number of the device, the first hash being the hash of the concatenation of the serial number and the unique network identifier address, a step (103) of determining a second hash of the concatenation of the serial number and the unique network identifier address of the device, and
a step (104) of onboarding the device if the first hash is equal to the second hash.

2. Method according to the claim 1 wherein, the unique network identifier address is a media access control address.

3. Method according to the claim 1 or 2 wherein: the second step (102) of receiving is realized by the network element.

4. Method according to the claim 1 or 2 or 3 wherein:
the first hash and the serial number are created by a manufacturer of the device and written on the device, on the package of the device and/or within the user-manual.

5. Method according to the claim 1 or 2 or 3 or 4 wherein, the step 103 of determining is realized by the network element.

6. Method according to the claim 1 or 2 or 3 or 4 or 5 wherein the network element is a gateway or a set-top box.

7. Method according to the claim 1 or 2 or 3 or 4 or 5 or 6 in which the device is an loT device.

8. Method according to claim 4, wherein a second step (102) comprises receiving by the network element from a smartphone and/or a dedicated administrative application the first hash and the serial number of the device.

9. Network element configured to onboard a device and comprising:
first means (201) for receiving, from the device, a connect message this message comprising a unique network identifier address of the device,
second means (202) for receiving a first hash and the serial number of the device, the first hash being the hash of the concatenation of the serial number and the unique network identifier address,
means (203) for determining a second hash of the concatenation of the serial number and the unique network identifier address of the connected device, and
means (204) for onboarding the device if the first hash is equal to the second hash.

10. Network element according to claim 9 comprising a gateway or a set-top box.

11. System comprising,
• a device to be onboarded on the system and
• a network element comprising
first means (201) for receiving, from the device, a connect message this message comprising a unique network identifier address of the device,
second means (202) for receiving a first hash and a serial number of the device, the first hash being the hash of the concatenation of the serial number and the unique network identifier address, means (203) for determining a second hash of the concatenation of the serial number and the unique network identifier address of the device, and
means (204) for onboarding the device if the first hash is equal to the second hash.

12. A system according to claim 11, wherein the network element comprises a gateway or a set-top-box.

13. A system according to claim 11, wherein the device comprises an loT device.

14. Computer-readable medium having embodied thereon a computer program, which when executed on a system according to claim 11 will cause the system to carry out the method of claim 1.

## Patentansprüche

1. Verfahren zum Einbinden einer Vorrichtung, umfassend:
einen ersten Schritt (101) des Empfangens einer Verbindungsnachricht durch ein Netzwerkelement und von der Vorrichtung, wobei diese Nachricht eine eindeutige Netzwerkkennungsadresse der Vorrichtung umfasst,
einen zweiten Schritt (102) des Empfangens eines ersten Hashes und einer Seriennummer der Vorrichtung, wobei der erste Hash der Hash der Verkettung der Seriennummer und der eindeutigen Netzwerkkennungsadresse ist,
einen Schritt (103) des Bestimmens eines zweiten Hashes aus der Verkettung der Seriennummer und der eindeutigen Netzwerkkennungsadresse der Vorrichtung, und
einen Schritt (104) des Einbindens der Vorrichtung, wenn der erste Hash gleich dem zweiten Hash ist.

2. Verfahren nach Anspruch 1, wobei die eindeutige Netzwerkkennungsadresse eine Medienzugriffssteuerungs- (Media Access Control, MAC) Adresse ist.

3. Verfahren nach Anspruch 1 oder 2, wobei: der zweite Schritt (102) des Empfangens durch das Netzelement realisiert wird.

4. Verfahren nach Anspruch 1 oder 2 oder 3, wobei:
der erste Hash und die Seriennummer von einem Hersteller der Vorrichtung erstellt werden und auf die Vorrichtung, auf die Verpackung der Vorrichtung und/oder in die Bedienungsanleitung geschrieben werden.

5. Verfahren nach Anspruch 1 oder 2 oder 3 oder 4, wobei der Schritt 103 des Bestimmens durch das Netzelement realisiert wird.

6. Verfahren nach Anspruch 1 oder 2 oder 3 oder 4 oder 5, wobei das Netzwerkelement ein Gateway oder eine Set-Top-Box ist.

7. Verfahren nach Anspruch 1 oder 2 oder 3 oder 4 oder 5 oder 6, bei dem die Vorrichtung eine IoT-Vorrichtung ist.

8. Verfahren nach Anspruch 4, wobei ein zweiter Schritt (102) das Empfangen des ersten Hashes und der Seriennummer der Vorrichtung durch das Netzwerkelement von einem Smartphone und/oder einer dedizierten Verwaltungsanwendung umfasst.

9. Netzwerkelement, das zum Einbinden einer Vorrichtung konfiguriert ist und Folgendes umfasst:
erste Mittel (201) zum Empfangen einer Verbindungsnachricht von der Vorrichtung, wobei diese Nachricht eine eindeutige Netzwerkkennungsadresse der Vorrichtung umfasst,
zweite Mittel (202) zum Empfangen eines ersten Hashes und der Seriennummer der Vorrichtung, wobei der erste Hash der Hash der Verkettung der Seriennummer und der eindeutigen Netzwerkkennungsadresse ist,
Mittel (203) zum Bestimmen eines zweiten Hashes aus der Verkettung der Seriennummer und der eindeutigen Netzwerkkennungsadresse der verbundenen Vorrichtung, und
Mittel (204) zum Einbinden der Vorrichtung, wenn der erste Hash gleich dem zweiten Hash ist.

10. Netzelement nach Anspruch 9, umfassend ein Gateway oder eine Set-Top-Box.

11. System umfassend
• eine Vorrichtung, das in das System eingebunden werden soll und
• ein Netzelement umfassend
erste Mittel (201) zum Empfangen einer Verbindungsnachricht von der Vorrichtung, wobei diese Nachricht eine eindeutige Netzwerkkennungsadresse der Vorrichtung umfasst,
zweite Mittel (202) zum Empfangen eines ersten Hashes und einer Seriennummer der Vorrichtung, wobei der erste Hash der Hash der Verkettung der Seriennummer und der eindeutigen Netzwerkkennungsadresse ist,
Mittel (203) zum Bestimmen eines zweiten Hashes aus der Verkettung der Seriennummer und der eindeutigen Netzwerkkennungsadresse der Vorrichtung, und
Mittel (204) zum Einbinden der Vorrichtung, wenn der erste Hash gleich dem zweiten Hash ist.

12. System nach Anspruch 11, wobei das Netzwerkelement ein Gateway oder eine Set-Top-Box ist.

13. System nach Anspruch 11, wobei die Vorrichtung eine IoT-Vorrichtung umfasst.

14. Computerlesbares Medium, auf dem ein Computerprogramm verkörpert ist, das, wenn es auf einem System nach Anspruch 11 ausgeführt wird, das System veranlasst, das Verfahren nach Anspruch 1 durchzuführen.

## Revendications

1. Procédé pour l'embarquement d'un dispositif comprenant :
une première étape (101) de réception, par un élément de réseau et à partir du dispositif, d'un message de connexion, ce message comprenant une adresse d'identifiant de réseau unique du dispositif,
une seconde étape (102) de réception d'un premier hachage et d'un numéro de série du dispositif, le premier hachage étant le hachage de la concaténation du numéro de série et de l'adresse d'identifiant de réseau unique,
une étape (103) de détermination d'un second hachage de la concaténation du numéro de série et de l'adresse d'identifiant de réseau unique du dispositif, et
une étape (104) d'embarquement du dispositif si le premier hachage est égal au second hachage.

2. Procédé selon la revendication 1 dans lequel l'adresse d'identifiant de réseau unique est une adresse de contrôle d'accès au support.

3. Procédé selon la revendication 1 ou 2 dans lequel : la seconde étape (102) de réception est réalisée par l'élément de réseau.

4. Procédé selon la revendication 1 ou 2 ou 3 dans lequel :
le premier hachage et le numéro de série sont créés par un fabricant du dispositif et inscrits sur le dispositif, sur l'emballage du dispositif et/ou à l'intérieur du manuel utilisateur.

5. Procédé selon la revendication 1 ou 2 ou 3 ou 4 dans lequel l'étape 103 de détermination est réalisée par l'élément de réseau.

6. Procédé selon la revendication 1 ou 2 ou 3 ou 4 ou 5 dans lequel l'élément de réseau est une passerelle ou un boîtier adaptateur.

7. Procédé selon la revendication 1 ou 2 ou 3 ou 4 ou 5 ou 6 dans lequel le dispositif est un dispositif de l'Internet des objets, IoT.

8. Procédé selon la revendication 4, dans lequel une seconde étape (102) comprend la réception, par l'élément de réseau à partir d'un téléphone intelligent et/ou d'une application administrative dédiée, du premier hachage et du numéro de série du dispositif.

9. Élément de réseau configuré pour embarquer un dispositif et comprenant :
des premiers moyens (201) pour la réception, à partir du dispositif, d'un message de connexion, ce message comprenant une adresse d'identifiant de réseau unique du dispositif,
des seconds moyens (202) pour la réception d'un premier hachage et du numéro de série du dispositif, le premier hachage étant le hachage de la concaténation du numéro de série et de l'adresse d'identifiant de réseau unique,
des moyens (203) pour la détermination d'un second hachage de la concaténation du numéro de série et de l'adresse d'identifiant de réseau unique du dispositif connecté, et
des moyens (204) pour l'embarquement du dispositif si le premier hachage est égal au second hachage.

10. Élément de réseau selon la revendication 9 comprenant une passerelle ou un boîtier adaptateur.

11. Système comprenant,
• un dispositif devant être embarqué sur le système et
• un élément de réseau comprenant
des premiers moyens (201) pour la réception, à partir du dispositif, d'un message de connexion, ce message comprenant une adresse d'identifiant de réseau unique du dispositif,
des seconds moyens (202) pour la réception d'un premier hachage et d'un numéro de série du dispositif, le premier hachage étant le hachage de la concaténation du numéro de série et de l'adresse d'identifiant de réseau unique,
des moyens (203) pour la détermination d'un second hachage de la concaténation du numéro de série et de l'adresse d'identifiant de réseau unique du dispositif, et
des moyens (204) pour l'embarquement du dispositif si le premier hachage est égal au second hachage.

12. Système selon la revendication 11, dans lequel l'élément de réseau comprend une passerelle ou un boîtier adaptateur.

13. Système selon la revendication 11, dans lequel le dispositif comprend un dispositif de l'Internet des objets, IoT.

14. Support lisible par ordinateur ayant, incorporé sur celui-ci, un programme d'ordinateur, qui lorsqu'il est exécuté sur un système selon la revendication 11, amènera le système à mettre en œuvre le procédé selon la revendication 1.
